# FASCICULE DE BREVET EUROPEEN

(11) **EP 3 541 668 B1**
(45) Date de publication et mention de la délivrance du brevet: **11.08.2021**
(21) Numéro de dépôt: 17804635.5
(22) Date de dépôt: 17.11.2017
(51) Int. Cl.: B60R 21/213, B60R 13/02, B60R 21/216

(54) **ENSEMBLE DE FIXATION D'UN ÉLÉMENT DE GARNITURE**
ANORDNUNG ZUR BEFESTIGUNG EINES VERKLEIDUNGSELEMENTS
ASSEMBLY FOR ATTACHING A TRIM ELEMENT

(30) Priorité: 18.11.2016 FR 1661246
(43) Date de publication de la demande: 25.09.2019
(73) Titulaire: NOVARES France, 92140 Clamart (FR)
(72) Inventeur: BACELOS, François, 06300 Nice (FR)
(74) Mandataire: Delorme, Nicolas
(86) Numéro de dépôt international: PCT/FR2017/053148
(87) Numéro de publication internationale: WO 2018/091840

(56) Documents cités:
- EP-A2- 2 514 639
- EP-B1- 1 769 979
- DE-A1- 19 910 594
- US-B1- 6 431 585

## Description

L'invention concerne un ensemble de fixation d'un élément de garniture à un élément de structure d'un véhicule lors d'un déploiement d'un coussin gonflable de sécurité interposé entre les éléments de garniture et de carrosserie.

L'invention concerne également un véhicule équipé de cet ensemble. Les coussins gonflables de sécurité sont en particulier utilisés dans le domaine de l'automobile pour protéger les occupants d'un véhicule lors d'un accident.

Un coussin gonflable de sécurité, ou airbag, est une enveloppe flexible en toile dans laquelle est injecté un gaz par réaction chimique explosive, pour assurer la protection d'un occupant d'un véhicule.

Les coussins gonflables sont disposés dans l'habitacle du véhicule, dans le volant, dans la planche de bord, dans les montants de pavillon... Dans la mesure où les coussins gonflables sont des dispositifs de sécurité technique, ils sont masqués par des éléments de garniture généralement en matière plastique.

Lors de la détection d'un accident par le véhicule, l'élément de garniture qui peut inclure des lignes de rupture, est écarté par le coussin gonflable pour permettre le déploiement du coussin gonflable.

L'élément de garniture est retenu à la structure du véhicule pour éviter de blesser un occupant. On connait, par exemple, par le document EP 2 514 639 un ensemble de retenue d'un élément de garniture lors d'un déploiement d'airbag. selon le préambule de la revendication 1.

Dans le cas d'un coussin gonflable de sécurité latérale de type rideau, le coussin gonflable est interposé entre un élément de structure du véhicule formant un côté de caisse et un élément de garniture du véhicule monté sur cet élément de structure.

Lors de la détection d'une collision, le coussin se gonfle par injection de gaz au sein de celui-ci. Dans certains cas, le coussin se déploie et sollicite fortement l'élément de garniture qui va se déformer et peut se détacher de l'élément de structure dans l'habitacle. Afin que l'élément de garniture ou des fragments de celui-ci ne constitue pas un projectile pouvant blesser l'un des occupants du véhicule, il est nécessaire de retenir l'élément de garniture à l'élément de structure tout en permettant le déploiement du coussin gonflable.

Or, dans la démarche générale d'amélioration de la sécurité des occupants d'un véhicule, on assiste à une augmentation du volume des coussins gonflables qui peuvent aller jusqu'à 150/200 litres.

L'augmentation de capacité des coussins gonflables soumet les éléments de garnitures qui masquent les coussins gonflables à des sollicitations très fortes.

Dans ce contexte technique, un but de l'invention est d'améliorer la retenue d'un élément de garniture lors du déploiement d'un coussin gonflable et en particulier de coussin gonflable de grand volume qui produit une importante course de déploiement.

L'invention concerne un ensemble de fixation d'un élément de garniture à un élément de structure d'un véhicule entre lesquels est interposé un coussin gonflable de sécurité pouvant présenter une position repliée d'attente, une position déployée de protection et une position dégonflée de post déploiement, l'ensemble de fixation comprenant des moyens de fixation primaire permettant de retenir l'élément de garniture contre l'élément de structure, le coussin gonflable étant en position d'attente et des moyens de fixation secondaires permettant de retenir l'élément de garniture lorsque le coussin gonflable est en position de protection caractérisé en ce que l'ensemble comprend, de plus, des moyens de ramenée de l'élément de garniture vers l'élément de structure lorsque le coussin gonflable est en position de post déploiement.

L'invention permet ainsi de maîtriser et d'optimiser le débattement de l'élément de garniture en fonction du déploiement du coussin gonflable et de minimiser les sollicitations engendrées par le déploiement du coussin gonflable sur l'élément de garniture. Cet ensemble de fixation peut-être utilisé quelque soit le volume et la puissance d'explosion du coussin gonflable (fixation universelle). De plus, l'invention améliore le comportement à la déformation de l'élément de garniture lors du déploiement du coussin gonflable et en particulier d'un coussin gonflable de grand volume qui produit une importante course de débattement de l'élément de garniture et de replaquer l'élément de garniture contre l'élément de structure du véhicule après le déploiement du coussin gonflable »

Selon l'invention, les moyens de fixation primaire comprennent (i) un porte agrafe solidaire de l'élément de garniture présentant une ouverture d'encliquetage et (ii) un organe de retenue comprenant une tête de retenue encliquetée, d'une part, l'ouverture d'encliquetage du porte agrafe et encliquetée, d'autre part, dans une ouverture ménagée dans l'élément de structure, et en ce que les moyens de fixation secondaire comprennent un cordon reliant l'élément de garniture à la tête de retenue après le désencliquetage de la tête de retenue de l'ouverture du porte agrafe lors du déploiement du coussin gonflable, le cordon étant constitué d'un matériau élastique permettant de ramener l'élément de garniture vers l'élément de structure lorsque le coussin gonflable est en position post déploiement.

Il peut être envisagé que la tête de retenue comprenne une embase dans laquelle est fixée une extrémité du cordon, l'embase présentant des nervures d'encliquetage pour la retenue de l'élément de garniture et une agrafe destinée à s'engager dans l'ouverture de l'élément de structure.

Dans une variante, la tête de retenue est un ensemble monobloc comprenant l'embase et l'agrafe.

Dans une autre variante, la tête de retenue comprend une embase dotée d'une gorge de réception dans laquelle peut être glissée une agrafe.

Dans une autre variante, la tête de retenue comprend un jonc solidaire du cordon sur lequel l'agrafe est engagée, l'ensemble étant inséré dans la porte-agrafe.

De préférence, les moyens de fixation secondaires comprennent une ancre placée à l'extrémité du cordon déplaçable entre une position d'attente et une position de retenue dans laquelle l'ancre est en appui contre la porte agrafe.

De préférence, le cordon comprend un matériau élastomérique ayant un coefficient d'allongement de 100 à 300 %.

L'invention sera mieux comprise à la lecture de la description qui va suivre, donnée uniquement à titre d'exemple non limitatif et faite en se référant aux dessins sur lesquels :
Les figures 1 à 3 montrent un ensemble de fixation retenant un élément de garniture sur un élément de structure de véhicule selon différentes phases d'utilisation d'un coussin gonflage de sécurité ;
Les figures 4 et 5 montrent en perspective deux variantes de réalisation de l'invention ;
La figure 6 montre une forme de réalisation d'un organe de retenue ;
Les figures 7 et 8 montrent une autre forme de réalisation d'un organe de retenue utilisant une agrafe standard ;
Les figures 9 à 11 montrent plusieurs exemples d'agrafes pouvant être utilisés avec l'organe de retenue des figures 7 et 8,
La figure 12 montre une autre forme de réalisation d'un organe de retenue ;
Les figures 13 à 15 montrent d'autres formes de réalisation d'une agrafe.

Par simplification, les éléments communs aux différentes variantes de réalisation de l'invention portent des numéros communs.

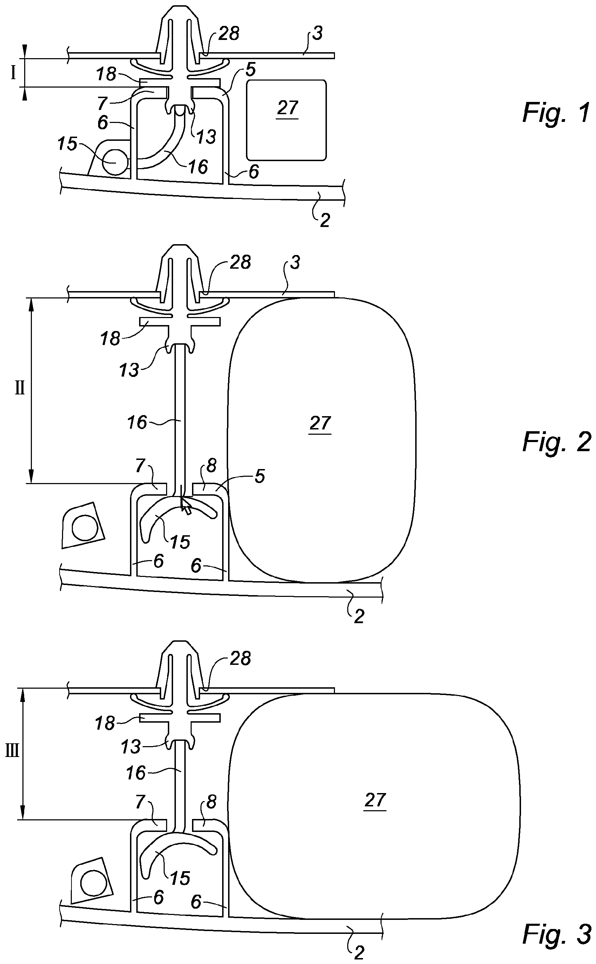

Comme cela apparait sur les figures 1 à 3, l'ensemble de fixation 1 est conçu pour assurer la fixation d'un élément de garniture 2, généralement en matière plastique, sur un élément de structure 3 d'un véhicule, généralement métallique.

Dans les exemples montrés aux figures 1 à 5, l'élément de garniture 2 est pourvu d'un porte agrafe 5 qui est venu de moulage avec l'élément de garniture 2.

Le porte agrafe 5 se présente sous la forme d'un pontet présentant deux montants 6 latéraux reliés par une entretoise 7 dans laquelle est ménagée une ouverture 8.

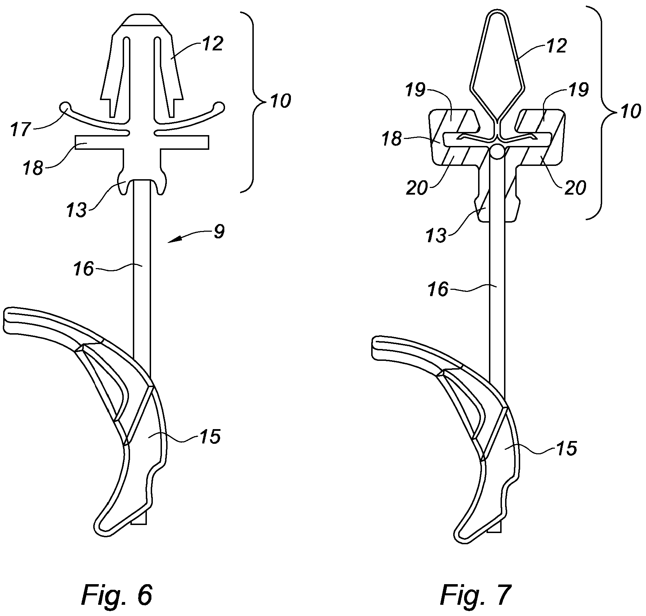

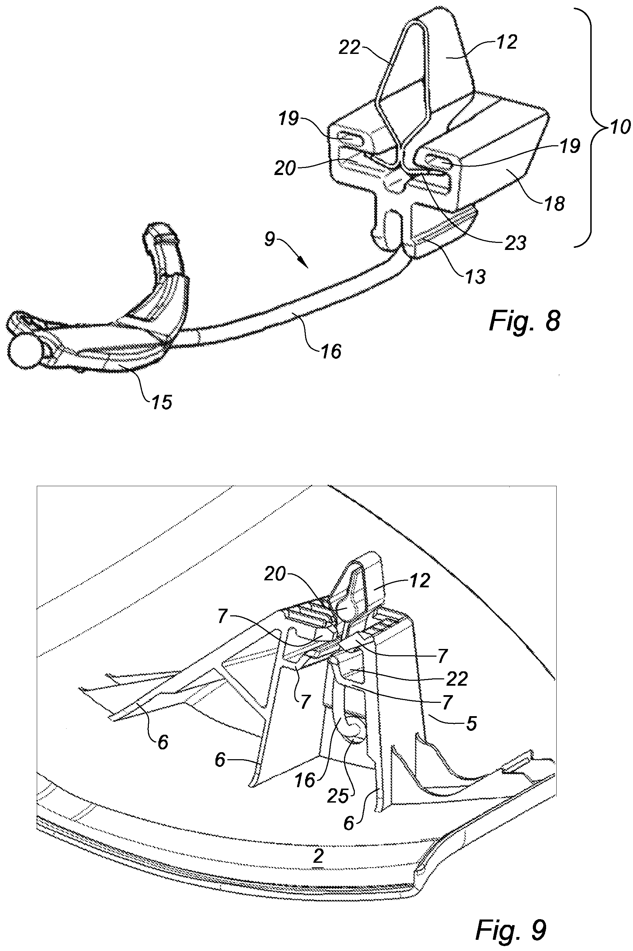

Le porte agrafe 5 est destiné à recevoir un organe de retenue 9 que l'on peut voir plus particulièrement aux figures 6 et 8 dans deux formes de réalisation possibles.

L'organe de retenue 9 présente trois parties, à savoir une tête de retenue 10 pourvue d'une agrafe 12 et de nervures d'encliquetage 13, une ancre 15 et un cordon 16 qui relie la tête de retenue 10 à l'ancre 15.

Comme cela apparaitra plus loin, la tête de retenue 10 est conçue pour assurer une fixation, d'une part, avec le porte agrafe 5 et, d'autre part, avec un élément de structure 3.

La figure 6 montre une forme de réalisation de la tête de retenue 10 dans laquelle l'agrafe 12 et les nervures d'encliquetages 13 forment un ensemble monobloc à partir d'une embase 18.

On peut également voir que dans cette forme de réalisation, l'agrafe 12 est dotée de lames d'appui 17 qui permettent d'absorber les tolérances de fabrication et évitent les bruits parasites.

Les figures 7 à 12 montrent deux variantes de réalisation de l'invention dans lesquelles l'agrafe 12 est séparée de son embase.

Les figures 7 à 8 montrent une première variante de réalisation dans laquelle la tête de retenue 10 est dissociée en deux parties distinctes, à savoir : une embase 18 et une agrafe 12 séparée de l'embase 18. Comme le montre la figure 7, l'embase est une pièce en matière plastique de préférence comoulée avec le cordon 16. L'embase 18 comprend deux retours 19 qui se font face et qui délimitent deux rainures 20.

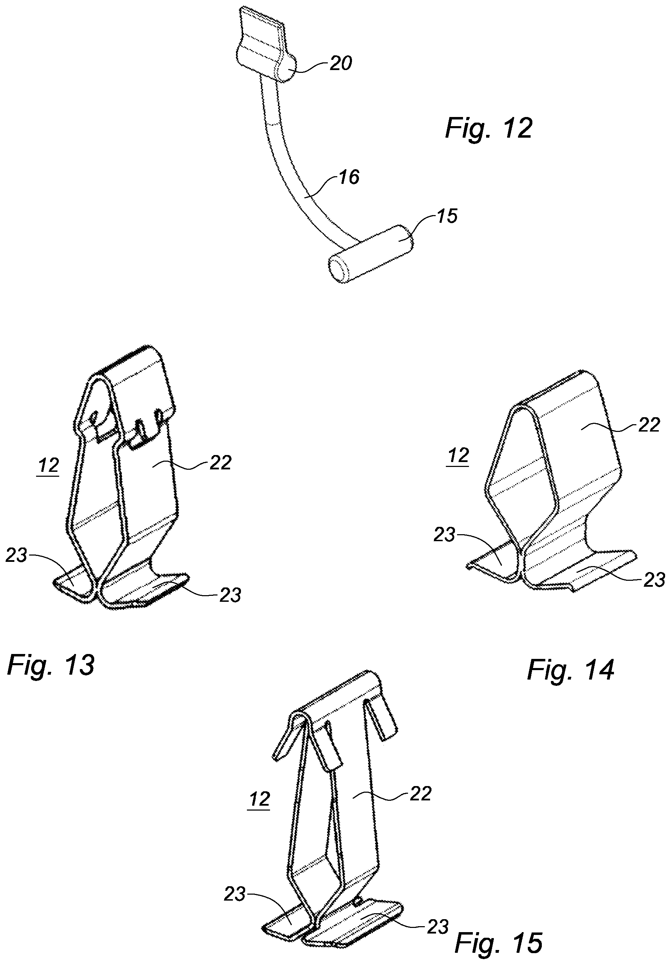

Dans cette variante de réalisation, l'agrafe 12 peut être un élément métallique en acier ressort qui présente une partie d'encliquetage 22 en forme en losange et un pied comprenant deux lames 23 qui viennent s'engager dans la rainures 20 de l'embase 18. L'agrafe 12 peut présenter, selon les cas, des variantes de forme comme cela apparait aux figures 13, 14 et 15. Cette variante de réalisation permet ainsi d'embarquer des agrafes 12 métalliques qui, par ailleurs, peuvent être de type standard.

L'ancre 15 peut présenter une forme arquée ou autrement dit en « croissant de lune ». L'ancre 15 est mécaniquement raccordée au cordon 16, par exemple par surmoulage.

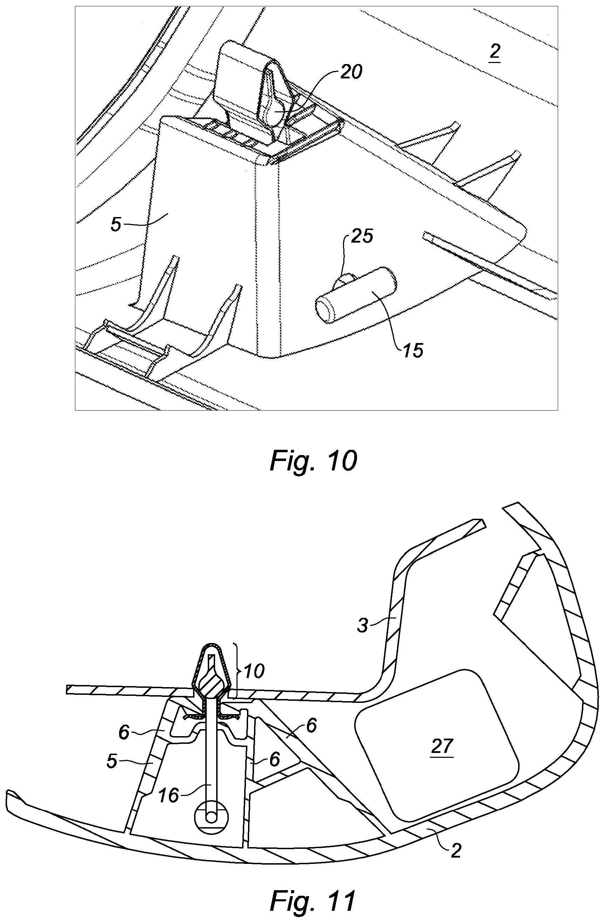

Les figures 10 à 11 montrent une deuxième variante de réalisation dans laquelle une agrafe 12 est fixée directement sur le cordon 16. Dans cette variante de réalisation, une ancre 15 en forme de barreau et un jonc 20 sensiblement piriforme sont surmoulés sur le cordon 16 pour former l'organe de retenue 9. L'agrafe 12 qui peut être une agrafe métallique du type de celles représentées que figures 13 à 15 est glissée sur le jonc 20. Les propriétés d'élasticité de l'agrafe 12 sont mises à profit pour assurer le blocage de l'agrafe sur le jonc.

Dans cette variante de réalisation de l'invention, le porte agrafe 5 peut présenter deux entretoises 7 superposées qui délimitent une chambre 22 dans laquelle les lames 23 qui forment le pied de l'agrafe 12 sont glissées comme on le voit sur la figure 11.

En fonction de la configuration de l'élément de garniture 2, le porte agrafe 5 peut comprendre trois montants 6.

Le cordon 16 qui relie l'ancre 15 à la tête de retenue 10 est réalisé dans un matériau élastique à base notamment d'élastomère du type élasthanne. Il s'agit d'un matériau fortement élastique pouvant avoir un coefficient d'allongement de l'ordre de 100 à 300 %.

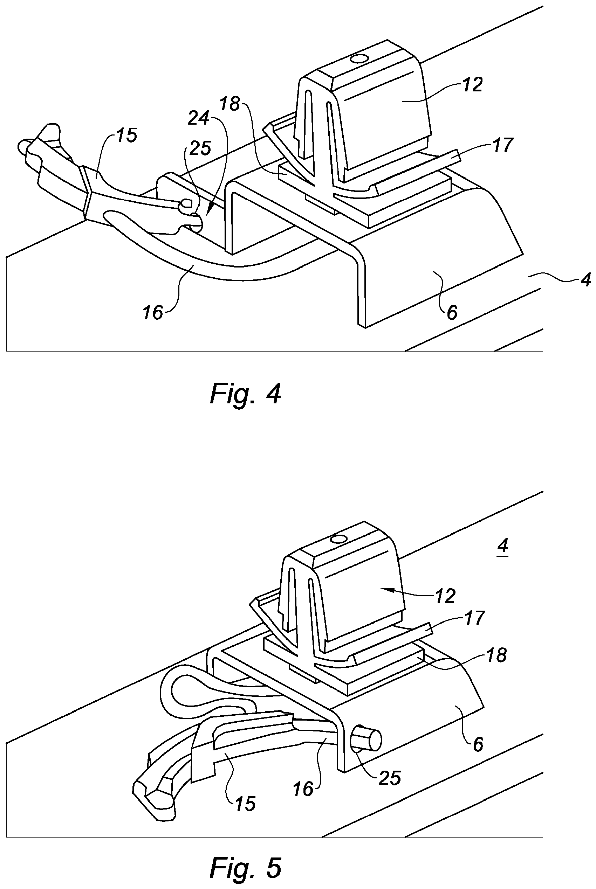

Les figures 4 et 5 représentent deux variantes de réalisation d'un élément de garniture 2 en attente de pose sur un véhicule.

Dans une première forme de réalisation, le porte agrafe 5 assure le blocage de l'ancre 15 par une ouverture 25 réalisée dans une paroi 24 qui est perpendiculaire à un montant du porte agrafe 5 comme le montre la figure 1. Dans une deuxième forme de réalisation, une ouverture 25 est prévue directement dans le montant du porte agrafe dans laquelle s'engage l'ancre 15.

L'élément de garniture 2 ainsi conçu est encliqueté dans une ouverture 28 ménagée dans un élément de structure 3 lors de l'assemblage du véhicule.

La figure 1 montre ainsi l'élément de garniture 2 encliqueté dans l'ouverture de l'élément de structure 3.

Comme on le voit sur cette figure, l'organe de retenu 10 réalise une fixation primaire de l'élément de garniture 2 sur l'élément de structure 3 grâce à l'agrafe 12 qui assure la retenue sur l'élément de structure 3 et grâce aux nervures d'encliquetage 13 qui assurent la retenue sur le porte agrafe 5.

Un coussin gonflable 27 représenté schématiquement à la figure 1 dans sa configuration repliée est interposé entre l'élément de structure 3 et l'élément de garniture 2.

Lorsque le véhicule détecte une situation de danger pour un occupant, une commande de déploiement est envoyée au coussin gonflable 27 qui déclenche le déploiement du coussin gonflable 27.

La figure 2 montre la phase de déploiement du coussin gonflable 27 au cours de laquelle le coussin gonflable 27 exerce une poussée sur l'élément de garniture 2. La poussée sur l'élément de garniture 2 entraine un déclippage du porte agrafe 5 qui libère l'élément de garniture 2. La tête de retenue 10 reste fixée dans l'élément de structure 3 mais libère l'élément de garniture 2 ; sous l'effet de la poussée du coussin, les nervures d'encliquetage s'effacent et libèrent le porte agrafe 5.

Dans cette variante de réalisation, l'élément de garniture 2 est alors relié au véhicule par le cordon 16. L'ancre 15 se déclippe de l'ouverture 25 dans laquelle il était préalablement logé et vient se mettre en appui contre l'entretoise 7 du pontet, étant précisé que l'ancre 15 présente une dimension qui ne lui permet pas de passer au travers de l'ouverture 8 du porte agrafe 5.

Dans une autre variante de réalisation, l'ancre 15 ne se déclippe pas de l'ouverture 25.

La figure 3 montre la configuration post déploiement.

Le cordon 16 qui est en matériau élastique s'allonge et accompagne le déploiement du coussin gonflable 27 comme le montre la figure 4 et risque de blesser un occupant du véhicule.

En configuration post déploiement au cours de laquelle le coussin gonflable 27 se dégonfle par des évents ou par la porosité de la toile formant le coussin, le cordon 16 qui a été sollicité de manière élastique se contracte et ramène l'élément de garniture 2 en direction de l'élément de structure 3 évitant ainsi que l'élément de garniture 2 pende en bout de cordon 16.

Les figures 1 à 3 montrent respectivement :
- La retenue primaire de l'élément de garniture 2 sur l'élément de carrosserie 3 selon une cote nominale I ;
- La retenue secondaire de l'élément de garniture 2 sur l'élément de structure 3 au cours du déploiement de coussin gonflable 27 selon une cote maximale II ;
- La retenue secondaire de l'élément de garniture 2 sur l'élément de carrosserie 3 en phase de dégonflage du coussin gonflable 27 au cours de laquelle le cordon élastique 16 ramène l'élément de garniture 2 en direction de l'élément de structure 3 selon une cote finale III qui peut être de l'ordre de 50% de la cote maximale II.

L'invention fournit ainsi un ensemble de fixation d'un élément de garniture 2 recouvrant un coussin gonflable de grande capacité. Grâce à la présence d'un cordon 16 élastique, l'ensemble de fixation peut assurer la retenue d'un élément de garniture 2 lors du déploiement d'un coussin de grande capacité en accompagnant le déploiement du coussin et peut assurer l'que l'élément de garniture 2 se plaque sur le coussin lors du dégonflage du coussin gonflable.

## Revendications

1. Ensemble de fixation d'un élément de garniture (2) à un élément de structure (3) d'un véhicule entre lesquels est interposé un coussin gonflable (27) de sécurité pouvant présenter une position repliée d'attente, une position déployée de protection et une position dégonflée de post déploiement, l'ensemble de fixation comprenant des moyens de fixation primaire permettant de retenir l'élément de garniture (2) contre l'élément de structure (3), le coussin gonflable (27) étant en position d'attente et des moyens de fixation secondaires permettant de retenir l'élément de garniture (2) lorsque le coussin gonflable (27) est en position de protection, l'ensemble comprend, de plus, des moyens de ramenée de l'élément de garniture (2) vers l'élément de structure (3) lorsque le coussin gonflable (27) est en position de post déploiement, **caractérisé en ce que** les moyens de fixation primaire comprennent (i) un porte agrafe (5) solidaire de l'élément de garniture (2) présentant une ouverture d'encliquetage (18) et (ii) un organe de retenue (9) comprenant une tête de retenue (10) encliquetée, d'une part, l'ouverture d'encliquetage (8) du porte agrafe (5) et encliquetée, d'autre part, dans une ouverture ménagée (28) dans l'élément de structure (3),
et **en ce que** les moyens de fixation secondaire comprennent un cordon (16) reliant l'élément de garniture (2) à la tête de retenue (10) après le désencliquetage de la tête de retenue (10) de l'ouverture (8) du porte agrafe (5) lors du déploiement du coussin gonflable (27), le cordon (16) étant constitué d'un matériau élastique permettant de ramener l'élément de garniture (2) vers l'élément de structure (3) lorsque le coussin gonflable (27) est en position post déploiement.

2. Ensemble de fixation selon la revendication 1, **caractérisé en ce que** la tête de retenue (10) comprend une embase dans laquelle est fixée une extrémité du cordon (16), l'embase (18) présentant des nervures d'encliquetage (13) pour la retenue de l'élément de garniture (2) et une agrafe (12) destinée à s'engager dans l'ouverture (28) de l'élément de structure (3).

3. Ensemble de fixation selon l'une des revendications 1 à 2, **caractérisé en ce que** la tête de retenue (10) est un ensemble monobloc comprenant l'embase (18) et l'agrafe (12).

4. Ensemble de fixation selon la revendication 2, **caractérisé en ce que** la tête de retenue (10) comprend une embase dotée d'une gorge de réception dans laquelle peut être glissée un agrafe (12).

5. Ensemble de fixation selon l'une des revendications 1 à 4, **caractérisé en ce que** la tête de retenue (10) comprend un jonc (20) solidaire du cordon (9) sur lequel l'agrafe (12) est engagée, l'ensemble étant inséré dans la porte-agrafe.

6. Ensemble selon l'une des revendications 1 à 5, **caractérisé en ce que** les moyens de fixation secondaires comprennent une ancre (15) placée à l'extrémité du cordon (16) déplaçable entre une position d'attente et une position de retenue dans laquelle l'ancre (15) est en appui contre le porte agrafe (5).

7. Ensemble selon l'une des revendications 1 à 6, **caractérisé en ce que** le cordon (16) comprend un matériau élastomérique ayant un coefficient d'allongement de 100 à 300 %.

## Patentansprüche

1. Anordnung zur Befestigung eines Verkleidungselements (2) an einem Strukturelement (3) eines Fahrzeugs, zwischen denen ein aufblasbares Sicherheitskissen (27) angebracht ist, das eine zusammengefaltete Warteposition, eine ausgebreitete Schutzposition und eine abgeschwollene Post-Ausbreitungsposition aufweisen kann, wobei die Befestigungsanordnung Primärbefestigungsmittel umfasst, die erlauben, das Verkleidungselement (2) am Strukturelement (3) zurückzuhalten, wobei das aufblasbare Kissen (27) in Warteposition ist und Sekundärbefestigungsmittel erlauben, das Verkleidungselement (2) zurückzuhalten, wenn das aufblasbare Kissen (27) in Schutzposition ist, wobei die Anordnung zusätzlich Rückführmittel des Verkleidungselements (2) zum Strukturelement (3) umfasst, wenn das aufblasbare Kissen (27) in Post-Ausbreitungsposition ist, **dadurch gekennzeichnet, dass** die Primärbefestigungsmittel (i) einen Klammerhalter (5), der mit dem Verkleidungselement (2) fest verbunden ist, mit einer Rastöffnung (18) umfassen und (ii) ein Rückhalteorgan (9), das einen Rückhaltekopf (10) umfasst, der zum einen in die Rastöffnung (8) des Klammerhalters (5) eingerastet und zum andern in einer im Strukturelement (3) ausgebildeten Öffnung (28) eingerastet ist,
und dass die Sekundärbefestigungsmittel eine Schnur (16) umfassen, die das Verkleidungselement (2) mit dem Rückhaltekopf (10) nach dem Ausrasten des Rückhaltekopfs (10) aus der Öffnung (8) des Klammerhalters (5) beim Entfalten des aufblasbare Kissens (27) verbindet, wobei die Schnur (16) aus einem elastischen Material besteht, das erlaubt, das Verkleidungselement (2) zum Strukturelement (3) zurückzuführen, wenn sich das aufblasbare Kissen (27) in Post-Ausbreitungsposition befindet.

2. Befestigungsanordnung nach Anspruch 1, **dadurch gekennzeichnet, dass** der Rückhaltekopf (10) eine Basis umfasst, an der ein Ende der Schnur (16) befestigt ist, wobei die Basis (18) Rastrippen (13) zum Zurückhalten des Verkleidungselements (2) aufweist und eine Klammer (12), die zum Einführen in die Öffnung (28) des Strukturelements (3) bestimmt ist.

3. Befestigungsanordnung nach einem der Ansprüche 1 bis 2, **dadurch gekennzeichnet, dass** der Rückhaltekopf (10) eine einteilige Anordnung ist, die die Basis (18) und die Klammer (12) umfasst.

4. Befestigungsanordnung nach Anspruch 2, **dadurch gekennzeichnet, dass** der Rückhaltekopf (10) eine Basis umfasst, die mit einer Empfangsnut versehen ist, in die eine Klammer (12) einschiebbar ist.

5. Befestigungsanordnung nach einem der Ansprüche 1 bis 4, **dadurch gekennzeichnet, dass** der Rückhaltekopf (10) eine Verdickung (20) umfasst, die mit der Schnur (9) fest verbunden ist, auf der die Klammer (12) sitzt, wobei die Anordnung in den Klammerhalter eingesetzt ist.

6. Anordnung nach einem der Ansprüche 1 bis 5, **dadurch gekennzeichnet, dass** die Sekundärbefestigungsmittel einen Anker (15) umfassen, der am Ende der Schnur (16) platziert ist, der zwischen einer Warteposition und einer Rückhalteposition verlagerbar ist, in welcher sich der Anker (15) auf dem Klammerhalter (5) abstützt.

7. Anordnung nach einem der Ansprüche 1 bis 6, **dadurch gekennzeichnet, dass** die Schnur (16) ein Elastomermaterial umfasst, das einen Längungskoeffizienten von 100 bis 300 % hat.

## Claims

1. An assembly for fastening a trim element (2) to a structural element (3) of a vehicle between which an airbag (27) is interposed, which can have a standby folded position, a protective deployed position and a post-deployment deflated position, the fastening assembly comprising primary fastening means allowing retaining the trim element (2) against the structural element (3), the airbag (27) being in the standby position and secondary fastening means allowing retaining the trim element (2) when the airbag (27) is in the protective position, the assembly further comprises means for returning the trim element (2) to the structural element (3) when the airbag (27) is in the post-deployment position, **characterized in that** the primary fastening means comprise (i) a clip holder (5) which is secured to the trim element (2) having a snap-fitting opening (18) and (ii) a retaining member (9) comprising a retaining head (10) which is snap-fitted, on the one hand, into the snap-fitting opening (8) of the clip holder (5) and snap-fitted, on the other hand, into an opening (28) formed in the structural element (3),
and **in that** the secondary fastening means comprise a cord (16) connecting the trim element (2) to the retaining head (10) after disengaging the retaining head (10) from the opening (8) of the clip holder (5) when deploying the airbag (27), the cord (16) being made of an elastic material allowing returning the trim element (2) to the structural element (3) when the airbag (27) is in the post-deployment position.

2. The fastening assembly according to claim 1, **characterized in that** the retaining head (10) comprises a base in which one end of the cord (16) is fastened, the base (18) having snap-fitting ribs (13) for retaining the trim element (2) and a clip (12) intended to be engaged in the opening (28) of the structural element (3).

3. The fastening assembly according to any of claims 1 to 2, **characterized in that** the retaining head (10) is a one-piece assembly comprising the base (18) and the clip (12).

4. The fastening assembly according to claim 2, **characterized in that** the retaining head (10) comprises a base provided with a receiving groove in which a clip (12) can be slid.

5. The fastening assembly according to any of claims 1 to 4, **characterized in that** the retaining head (10) comprises a ring (20) secured to with the cord (9) on which the clip (12) is engaged, the assembly being inserted into the staple holder.

6. The assembly according to any of claims 1 to 5, **characterized in that** the secondary fastening means comprise an anchor (15) placed at the end of the cord (16) which is displaceable between a standby position and a retaining position in which the anchor (15) bears against the clip holder (5).

7. The assembly according to any of claims 1 to 6, **characterized in that** the cord (16) comprises an elastomeric material having an elongation coefficient of 100 to 300%.
